# EUROPEAN PATENT APPLICATION

(11) **EP 4 514 049 A1**
(43) Date of publication of application: **26.02.2025**
(21) Application number: 22938462.3
(22) Date of filing: 19.04.2022
(51) Int. Cl.: H04W 74/08, H04W 16/14, H04W 72/02, H04W 72/0453

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/018234
(87) International publication number: WO 2023/203659

(57) **Abstract**

A terminal includes a receiving unit configured to receive a signal from another terminal in a resource pool in an unlicensed band, a controller configured to execute LBT (Listen before talk) in the resource pool, and a transmitting unit configured to transmit the signal to another terminal in the resource pool when the LBT is successful, wherein in the resource pool, the controller executes the LBT for a band in which a subchannel to which interlacing of a frequency domain is applied is arranged.

## Description

### TECHNICAL FIELD

The disclosures herein relate to terminals and communication methods in a wireless communication system.

### BACKGROUND ART

In LTE (Long Term Evolution) and successor systems to LTE (e.g., LTE-A (LTE Advanced), NR (New Radio) (Also known as 5G.)), D2D (Device to Device) technology, in which terminals directly communicate with each other without using a base station, is being considered (e.g., Non-Patent Literature 1).

D2D reduces traffic between the terminals and the base station, and enables communication between terminals even when the base station cannot communicate due to a disaster or the like. In the 3GPP (3rd Generation Partnership Project), D2D is referred to as "sidelink", but in this specification, D2D, which is a more general term, is used. However, in the description of embodiments described later, sidelink is also used as necessary.

D2D communication is roughly divided into D2D discovery to discover other terminals capable of communication, and D2D communication (Also referred to as D2D direct communication, direct communication between terminals, etc.) for direct communication between terminals. Hereinafter, D2D communication, D2D discovery, and the like are simply referred to as D2D when they are not particularly distinguished. Signals transmitted and received in D2D are referred to as D2D signals. Various use cases of services related to V2X (Vehicle to Everything) in NR have been considered (e.g., Non-Patent Literature 2).

Further, using a higher frequency band than in previous releases (e.g., Non-Patent Literature 3) is considered in NR release 17. For example, in the frequency band from 52.6 GHz to 71 GHz, applicable numerology including subcarrier spacing, channel bandwidth, etc., design of a physical layer, possible failures in actual wireless communication, etc. have been considered.

### CITATION LIST

### NON-PATENT LITERATURE

Non-Patent Literature 1: 3GPP TS 38.211 V16.6.0 (2021-06)
Non-Patent Literature 2: 3GPP TR 22.886 V15.1.0 (2017-03)
Non-Patent Literature 3: 3GPP TS 38.306 V16.5.0 (2021-06)

### SUMMARY OF THE INVENTION

### PROBLEM TO BE SOLVED BY THE INVENTION

An unlicensed band is defined in a newly operated frequency band using a higher frequency than conventional ones. In the unlicensed band, various regulations are specified, and for example, LBT (Listen before talk) is executed at the time of channel access. When D2D communication is performed in the high frequency band, an operation conforming to the regulations in the unlicensed band is required.

The present invention has been made in view of the above points, and it is an object of the present invention to execute direct communication between terminals satisfying the regulations in the unlicensed band.

### MEANS OF SOLVING THE PROBLEM

According to the disclosed technology, a terminal including a receiving unit configured to receive a signal from another terminal in a resource pool in an unlicensed band, a controller configured to execute LBT (Listen before talk) in the resource pool, and a transmitting unit configured to transmit the signal to another terminal in the resource pool when the LBT is successful, wherein in the resource pool, the controller executes the LBT to a band in which a subchannel to which interlacing of a frequency domain is applied is arranged, is provided.

### EFFECTS OF THE INVENTION

According to the disclosed technology, it is possible to execute direct communication between terminals which satisfies a regulation in the unlicensed band.

### BRIEF DESCRIPTION OF THE DRAWINGS

[FIG. 1] FIG. 1 is a drawing explaining V2X.
[FIG. 2] FIG. 2 is a drawing illustrating an example of a frequency range in an embodiment of the present invention.
[FIG. 3] FIG. 3 is a drawing illustrating an example of resource allocation mode 1.
[FIG. 4] FIG. 4 is a drawing explaining an example of DCI format.
[FIG. 5] FIG. 5 is a drawing illustrating an example (1) of resource allocation mode 2.
[FIG. 6] FIG. 6 is a drawing illustrating an example (2) of resource allocation mode 2.
[FIG. 7] FIG. 7 is a drawing illustrating an example (1) of wideband operation.
[FIG. 8] FIG. 8 is a drawing illustrating an example (2) of wideband operation.
[FIG. 9] FIG. 9 is a drawing illustrating an example (3) of wideband operation.
[FIG. 10] FIG. 10 is a drawing illustrating an example (4) of wideband operation.
[FIG. 11] FIG. 11 is a drawing illustrating an example (5) of wideband operation.
[FIG. 12] FIG. 12 is a drawing illustrating an example (6) of wideband operation.
[FIG. 13] FIG. 13 is a drawing illustrating an example (1) of a resource pool in an embodiment of the present invention.
[FIG. 14] FIG. 14 is a drawing illustrating an example (2) of a resource pool in the embodiment of the present invention.
[FIG. 15] FIG. 15 is a drawing illustrating an example of a functional configuration of a base station 10 in the embodiment of the present invention.
[FIG. 16] FIG. 16 is a drawing illustrating an example of a functional configuration of a terminal 20 in the embodiment of the present invention.
[FIG. 17] FIG. 17 is a drawing illustrating an example of a hardware configuration of the base station 10 or the terminal 20 in the embodiment of the present invention.
[FIG. 18] FIG. 18 is a drawing illustrating an example of a configuration of a vehicle 2001 in the embodiment of the present invention.

### DESCRIPTION OF THE PREFERRED EMBODIMENTS

In the following, an embodiment of the present invention will be described with reference to the accompanying drawings. The embodiment described below is only an example, and the embodiment to which the present invention is applied is not limited to the following embodiment.

In the operation of the wireless communication system according to the embodiments of the present invention, existing technology is used as appropriate. Here, the existing technology includes, for example, existing LTE, but is not limited to existing LTE. The term "LTE" used herein has a broad meaning including LTE-Advanced and later systems (e.g., NR) than LTE-Advanced or wireless LAN (Local Area Network) unless otherwise specified.

In the embodiment of the present invention, a duplex system may be a TDD (Time Division Duplex) system, an FDD (Frequency Division Duplex) system, or any other (e.g., Flexible Duplex, etc.) system.

In the embodiment of the present invention, to "configure" wireless parameters and the like may mean that predetermined values are pre-configured, or that the wireless parameters notified from a base station 10 or a terminal 20 are configured.

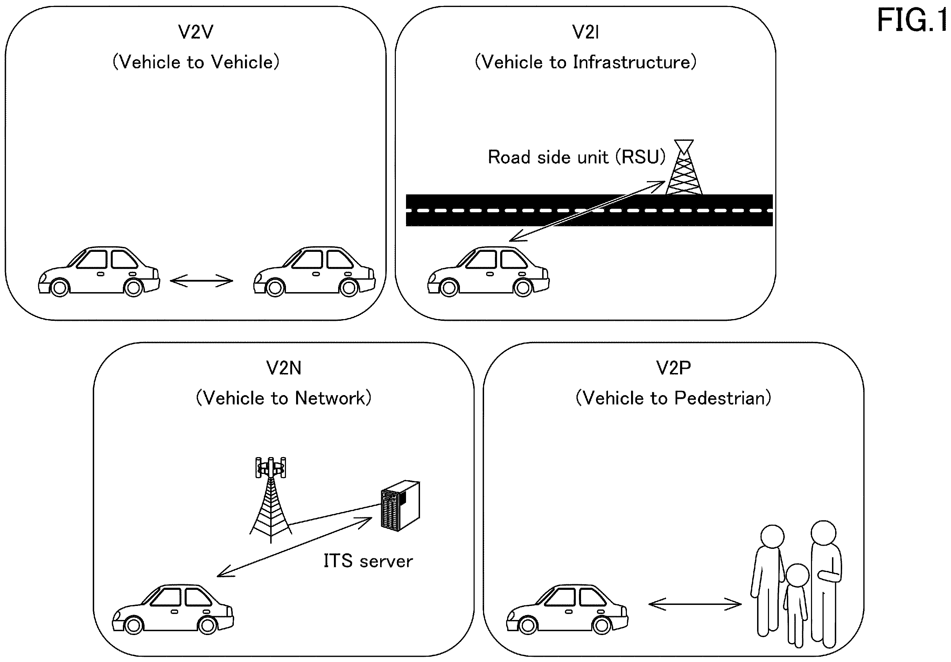

FIG. 1 is a drawing explaining V2X. In the 3GPP, consideration is being given to realizing V2X (Vehicle to Everything) or eV2X (enhanced V2X) by extending the D2D function, and specifications are being advanced. As shown in FIG. 1, V2X is a part of Intelligent Transport Systems (ITS), and is a generic term for V2V (Vehicle to Vehicle), which means a form of communication between vehicles; V2I (Vehicle to Infrastructure), which means a form of communication between a vehicle and a road-side unit (RSU) installed on the roadside; V2N (Vehicle to Network), which means a form of communication between a vehicle and an ITS server; and V2P (Vehicle to Pedestrian), which means a form of communication between a vehicle and a mobile terminal owned by a pedestrian.

In addition, in the 3GPP, V2X using LTE or NR cellular communication and inter-terminal communication is being considered. V2X using cellular communication is also referred to as cellular V2X. In V2X of NR, considerations to achieve larger capacity, lower latency, higher reliability, and QoS (Quality of Service) control are being furthered.

Regarding LTE or V2X of NR, it is envisaged that studies not limited to 3GPP specifications will be conducted in the future. For example, it is envisaged that consideration will be conducted on ensuring interoperability, reducing costs by implementing an upper layer, combining or switching multiple RATs (Radio Access Technology), complying with regulations in each country, and data acquisition, distribution, database management, and usage of LTE or NR V2X platforms.

In the embodiment of the present invention, it is mainly envisaged that the communication device is mounted on the vehicle, but the embodiment of the present invention is not limited to this embodiment. For example, the communication device may be a terminal owned by a person, the communication device may be a device mounted on a drone or an aircraft, or the communication device may be a base station, an RSU, a relay station (relay node), a terminal having scheduling capability, etc.

Note that SL (Sidelink) may be distinguished based on any one or a combination of UL (Uplink) or DL (Downlink) and 1)-4) below. SL may be referred to as other names.
1) Resource allocation in the time domain
2) Resource allocation in the frequency domain
3) Reference synchronization signal (including SLSS (Sidelink Synchronization Signal))
4) Reference signal used for path loss measurement for transmission power control

Regarding OFDM (Orthogonal Frequency Division Multiplexing) of SL or UL, any of CP-OFDM (Cyclic-Prefix OFDM), DFT-S-OFDM (Discrete Fourier Transform-Spread-OFDM), and OFDM without transform precoding or OFDM with transform precoding may be applied.

Mode 3 and Mode 4 are specified for SL resource allocation to terminal 20 in SL of LTE. In Mode 3, transmission resources are dynamically allocated by DCI (Downlink Control Information) transmitted from the base station 10 to the terminal 20. In Mode 3, SPS (Semi-Persistent Scheduling) is also possible. In Mode 4, the terminal 20 autonomously selects transmission resources from a resource pool.

Note that the slot in the embodiment of the present invention may be replaced as a symbol, minislot, subframe, wireless frame, or TTI (Transmission Time Interval). The cell in the embodiment of the present invention may be replaced as a cell group, carrier component, BWP, resource pool, resource, RAT (Radio Access Technology), system (including wireless LAN), or the like.

Note that in the embodiment of the present invention, the terminal 20 is not limited to a V2X terminal but may be any type of terminal to perform D2D communication. For example, the terminal 20 may be a terminal owned by a user such as a smartphone, or an IoT (Internet of Things) device such as a smart meter.

The 3GPP release 16 or release 17 sidelink is specified for 1) and 2) shown below.
1) An environment in which only 3GPP terminals exist in the ITS (Intelligent Transport Systems) band
2) An environment in which UL resources can be used for SL in licensed bands of FR1 (Frequency range 1) and FR2 defined in NR

As a sidelink after 3GPP release 18, it is considered to newly target unlicensed bands. For example, these are unlicensed bands such as 5-7 GHz band and 60 GHz band.

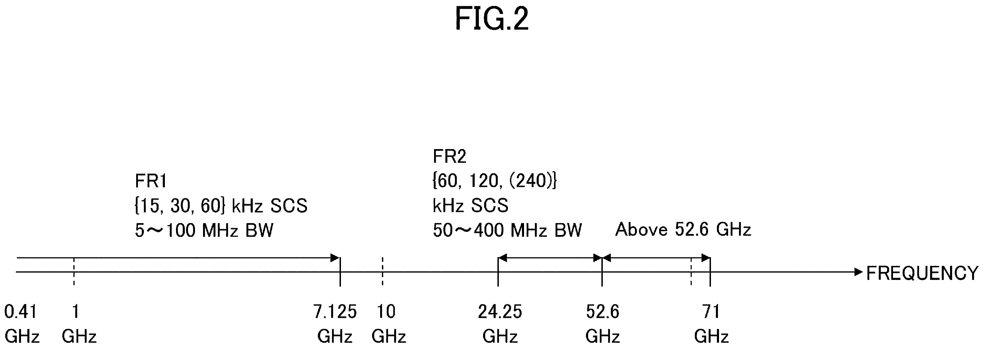

FIG. 2 is a drawing illustrating an example of a frequency range in an embodiment of the present invention. In the NR specification of 3GPP release 17, it is considered to operate a frequency band of 52.6 GHz or higher, for example. As shown in FIG. 2, FR1 for which current operation is specified is a frequency band from 410 MHz to 7.125 GHz, SCS (Sub carrier spacing) is 15, 30 or 60 kHz, and the bandwidth is 5 MHz to 100 MHz. FR2 is a frequency band from 24.25 GHz to 52.6 GHz, SCS is 60, 120 or 240 kHz, and the bandwidth is 50 MHz to 400 MHz. For example, the newly operated frequency band may be assumed to be from 52.6 GHz to 71 GHz.

For example, as examples of unlicensed bands in the 5-7 GHz band, 5.15 GHz to 5.35 GHz, 5.47 GHz to 5.725 GHz, 5.925 GHz or higher, and the like are assumed.

For example, as examples of unlicensed bands in the 60 GHz band, 59 GHz to 66 GHz, 57 GHz to 64 GHz or 66 GHz, 59.4 GHz to 62.9 GHz, and the like are assumed.

In the unlicensed band, various regulations are specified so as not to affect other systems or devices.

For example, in the 5-7 GHz band, LBT (Listen before talk) is executed upon channel access. The base station 10 or the terminal 20 detects power during a predetermined period immediately before transmission, and stops transmission when the power exceeds a predetermined value, that is, when transmission of other equipment is detected. In addition, a maximum channel occupation time (Maximum channel occupancy time, MCOT) is specified. The MCOT is the maximum time interval during which transmission is allowed to continue if transmission is started after LBT. For example, it is 4 ms in Japan. Also, as a requirement of occupied channel bandwidth (Occupied channel bandwidth, OCB), if a transmission uses a certain carrier bandwidth, it is required to use more than X% of the bandwidth. For example, in Europe, it is required to use 80% to 100% of the nominal channel bandwidth (NCB). The purpose of the OCB requirement is to ensure that channel access power detection is performed correctly. Also, regarding the maximum transmission power and the maximum power spectral density, it is regulated that transmission is performed at a predetermined transmission power or less. For example, in Europe, the maximum transmission power is 23 dBm in the 5150-5350 MHz band. Moreover, for example, in Europe, the maximum power spectral density is 10 dBm/MHz in the 5150-5350 MHz band.

For example, in the 60 GHz band, LBT is executed upon channel access. The base station 10 or the terminal 20 detects power during a predetermined period immediately before transmission, and stops transmission when the power exceeds a certain value, that is, when transmission of another device is detected. In addition, regarding the maximum transmission power and the maximum power spectrum density, it is specified that transmission is performed at a predetermined transmission power or less. It is also specified that the terminal has the ability to satisfy the OCB requirement.

For the sidelink in 3GPP release 16 and release 17, two kinds of resource allocation modes are specified as follows.

### 1)Resource allocation mode 1

The network performs sidelink scheduling. The terminal 20 performs sidelink transmission based on the sidelink grant received from the network.

### 2)Resource allocation mode 2

The terminal 20 autonomously selects and transmits a side link resource. Transmissions by other terminals 20 are monitored in advance to select a usable resource. Monitoring the transmission of another terminal 20 may be referred to as sensing. Each terminal 20 designates a future resource in transmission and refers to it when selecting the resource. Designating a future resource may be referred to as reservation.

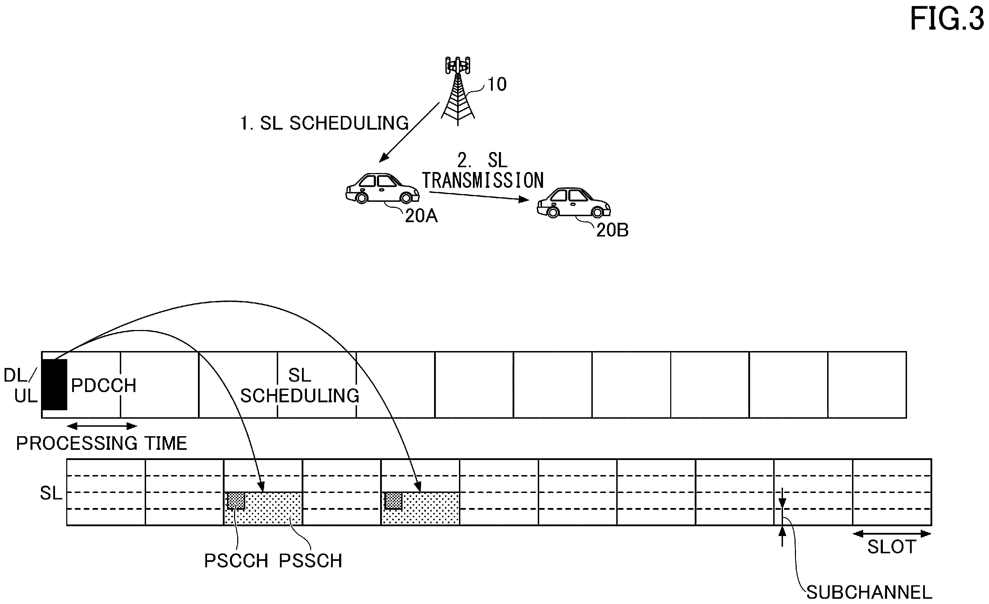

FIG. 3 is a drawing illustrating an example of resource allocation mode 1. As shown in FIG. 3, in resource allocation mode 1, SL transmission resources are allocated from the base station 10 to the terminal 20A. That is, as shown in FIG. 3, SL transmission resources (PSCCH/PSCCH) are allocated to the terminal 20A based on PDCCH (specifically, DCI) received from the base station 10, and the terminal 20A performs SL transmission to the terminal 20B using the transmission resources.

More specifically, the allocation of SL transmission from the base station 10 to the terminal 20A includes a Dynamic Grant (DG), a Configured Grant (CG) type 1, and a CG type **2.** In the resource allocation mode 1, the DCI format 3_0 is used for the DG and the CG type **2.** The monitoring opportunity of the DCI format 3_0 is configured separately from the other formats.

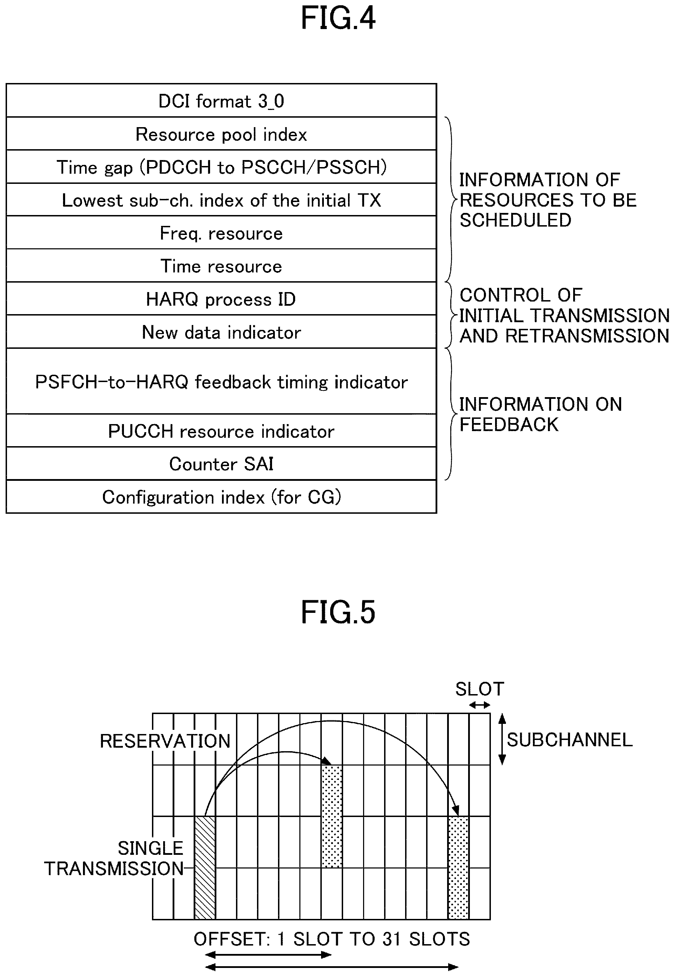

FIG. 4 is a drawing explaining an example of DCI format. As shown in FIG. 4, the information reported by the DCI format 3_0 includes information on resources to be scheduled, information on initial transmission and retransmission, and information on HARQ (Hybrid Automatic Repeat Request) feedback. Regarding the information on initial transmission and retransmission, the transmitting terminal 20A manages the association between the HPN (HARQ Process Number) specified in the DCI format 3_0 and the HPN in the SCI.

In the resource allocation mode 2, the terminal 20 autonomously selects a resource of periodic or non-periodic traffic by executing the following two steps. At this time, periodic or non-periodic resource reservations of other terminals 20 are considered.
Step 1) Identify candidate resources in the resource selection window
Step 2) Select resources to be used for transmission or retransmission from the identified candidates

Step 1 is performed based on two types of resource reservation. The first is a reservation for transmission or retransmission of non-periodic traffic based on a time resource assignment field. The second is a reservation for transmission or retransmission of periodic traffic based on a resource reservation period field.

FIG. 5 is a drawing illustrating an example (1) of resource allocation mode **2.** As shown in FIG. 5, a plurality of resources may be reserved in a single transmission. For example, an offset from a transmission for making a reservation to a resource to be reserved may be from 1 slot to 31 slots.

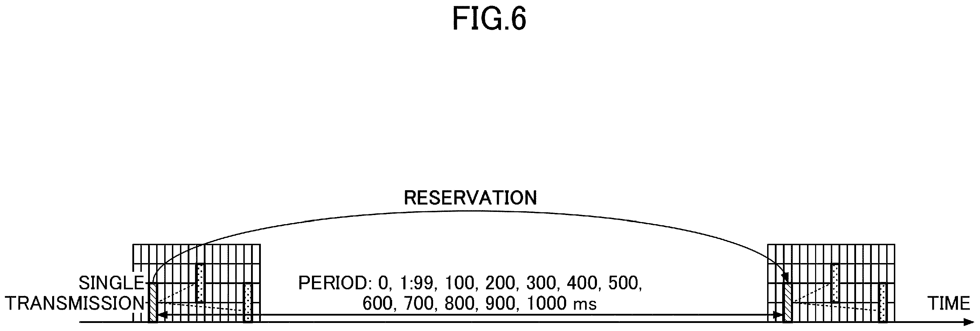

FIG. 6 is a drawing illustrating an example (2) of resource allocation mode **2.** As shown in FIG. 6, a resource may be periodically reserved by a single transmission. The period may be, for example, 0 ms, from 1 ms to 99 ms, 100 ms, 200 ms, 300 ms, 400 ms, 500 ms, 600 ms, 700 ms, 800 ms, 900 ms, and 1000 ms.

For LBT in a channel access procedure, LBT is performed for each predetermined bandwidth (e.g., 20 MHz). If no power is detected in the LBT band that contains each transmission, the transmission may be performed. Each CC in a Uu interface may be defined with a wider bandwidth than the LBT band. Therefore, wideband operation is supported.

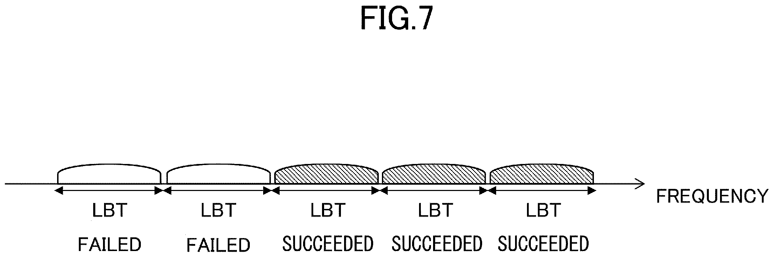

FIG. 7 is a drawing illustrating an example (1) of wideband operation. The subband bandwidth of basic LBT for coexistence with legacy wireless LAN and LAA (Licensed-assisted access) is 20 MHz. There is no problem with carrier aggregation based on a 20 MHz CC. As shown in FIG. 7, a CC that failed LBT is not used, but a CC that succeeded LBT is used.

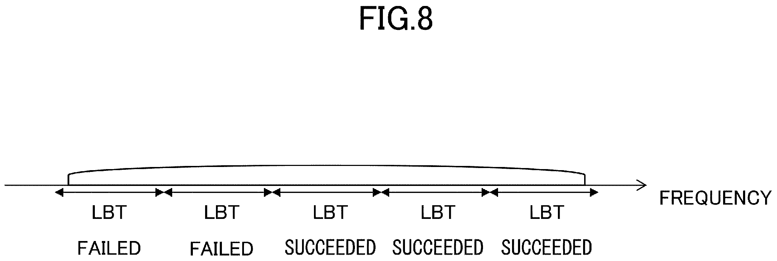

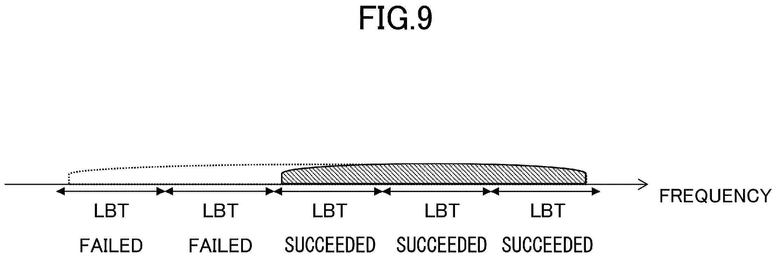

FIG. 8 is a drawing illustrating an example (2) of wideband operation. FIG. 9 is a drawing illustrating an example (3) of wideband operation. In the case of wideband operation in NR-U, if a part of the wideband fails LBT, it is necessary to decide whether all the wideband is not used as shown in FIG. 8, or whether a part of the band that succeeded LBT can be used as shown in FIG. 9.

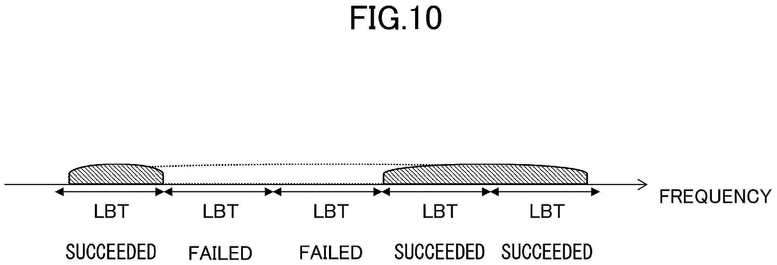

FIG. 10 is a drawing illustrating an example (4) of wideband operation. As shown in FIG. 9 or 10, when the LBT in the gNB succeeds in some or all of the LBT subbands, the transmission of PDSCH is permitted in the subbands where the LBT succeeds. As shown in FIG. 9, the gNB may transmit a single consecutive block, or as shown in FIG. 10, the gNB may transmit a plurality of discontinuous blocks.

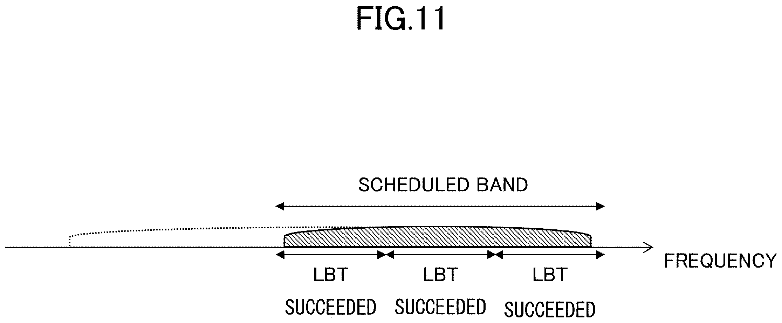

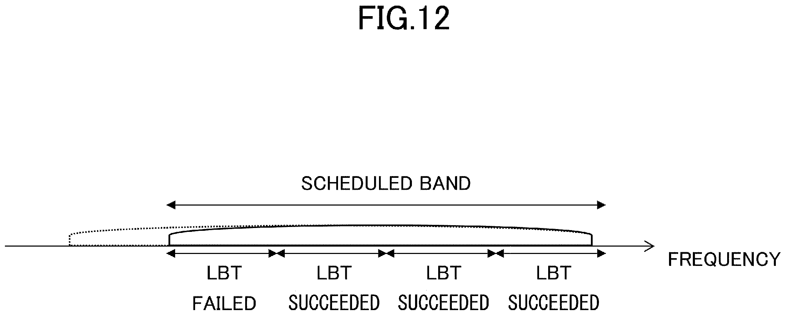

FIG. 11 is a drawing illustrating an example (5) of wideband operation. FIG. 12 is a drawing illustrating an example (6) of wideband operation. As shown in FIG. 11 or 12, when the LBT in the UE succeeds in all of the LBT subbands in the scheduled band, the PUSCH transmission is permitted. As shown in FIG. 12, when the LBT fails in some of the subbands, the PUSCH transmission is not permitted.

Here, it is required to specify an operation related to sidelink (Hereinafter, it is also referred to as "SL-U".) transmission in the unlicensed band. For example, an interlaced resource pool configuration has been considered to meet OCB requirements. It is also required to consider how to execute the above wideband operation in SL. For example, the UE operation is required to be specified when 40 MHz is used for SL, the resource pool is configured to be 40 MHz, and LBT is required to be executed in each 20 MHz.

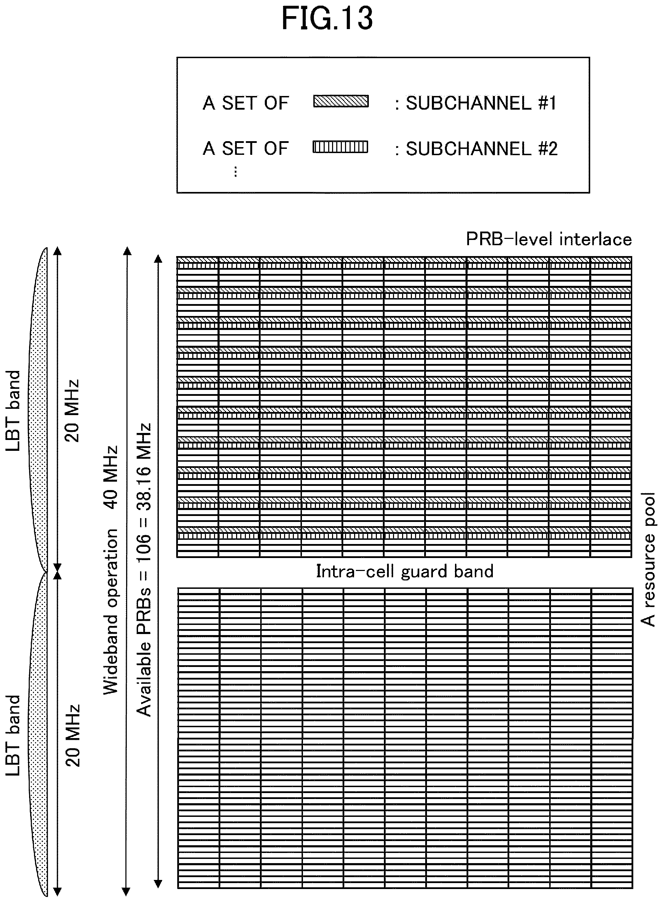

Therefore, when interlacing is applied to the resource pool in the unlicensed band, the configuration of each interlacing may be applied for each LBT band. FIG. 13 is a drawing illustrating an example (1) of a resource pool in an embodiment of the present invention. As shown in FIG. 13, each subchannel may be defined and configured closed to a certain LBT band. The interlacing configuration may be determined according to the number of PRBs corresponding to the LBT band.

For example, the subchannel index may be defined so that subchannels included in a certain LBT band are continuous. For transmission using a plurality of subchannels, subchannels included in the same LBT band may be preferentially allocated. FIG. 13 shows examples in which subchannel #1, subchannel #2, subchannel #3, subchannel #4, and subchannel #5 are assigned to one LBT band above the intra-cell guard band of FIG. 13 by applying interlacing, and subchannel #6, subchannel #7, subchannel #8, subchannel #9, and subchannel #10 are assigned to one LBT band below the intra-cell guard band of FIG. 13 by applying interlacing.

For example, a UE performing a transmission using a number of subchannels same as M or less than M may perform the transmission if the LBT is successful, i.e., no power is detected, in the LBT band in which the subchannel is included. M may be the number of interlacing in a certain LBT band, i.e., the number of subchannels in a certain LBT band.

For example, a UE performing a transmission using subchannels more than M may perform the transmission if the LBT is successful, i.e., no power is detected, in all LBT bands in which the subchannel is included.

For example, a UE performing a transmission using more than M subchannels may perform the transmission in the LBT successful band or not perform the transmission in all LBT bands in which the subchannel is included if the LBT fails, i.e., no power is detected, in any of the LBT bands in which the subchannel is included.

By the above-described operation, for example, in the resource pool shown in FIG. 13, when transmission is executed in the sub-channel #1, all of the transmission can be executed if the LBT of one LBT band is successful. That is, the probability of occurrence of transmission suspension due to the LBT failure can be reduced.

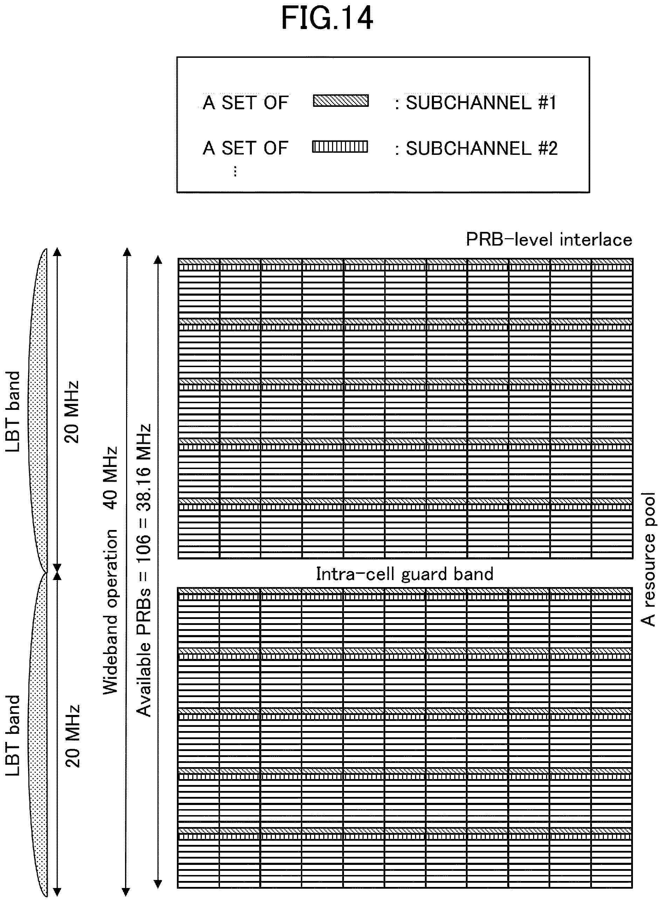

When interlacing is applied to the resource pool in the unlicensed band, the configuration of each interlacing may be applied to each SL band. The SL band may be replaced with a resource pool. FIG. 14 is a drawing illustrating an example (2) of a resource pool in the embodiment of the present invention. As shown in FIG. 14, the interlacing configuration may be determined not based on the LBT band but on the number of PRBs corresponding to the entire resource pool, that is, the entire resource pool. FIG. 14 shows examples in which subchannel #1, subchannel #2, subchannel #3, subchannel #4, subchannel #5, subchannel #6, subchannel #7, subchannel #8, subchannel #9, and subchannel #10 are allocated by applying interlacing to the entire resource pool of FIG. 14, that is, the two LBT bands.

For example, a UE performing a transmission using one or more subchannels may perform the transmission if LBT is successful in all LBT bands that include the subchannel, i.e., no power is detected.

For example, a UE performing transmission using one or more sub-channels may execute transmission in a successful LBT band and is not required to execute transmission in all LBT bands when LBT failure, i.e., power, is detected in any of the LBT bands including the sub-channel.

By the above-mentioned operation, for example, in the resource pool shown in FIG. 14, when transmission is executed in sub-channel #1, all transmission can be executed when LBT of two LBT bands is successful. That is, the interlacing configuration can be determined regardless of the LBT bands, and the terminal configuration can be simplified.

The above-described example may be applied to an operation in which one terminal 20 configures or allocates transmission resources of another terminal 20.

The above-described example is not limited to a V2X terminal, but may be applied to a terminal performing D2D communication.

By the above-described example, the resource pool can be configured so as to satisfy the regulation by applying the interlacing configuration to the subchannels in the unlicensed band.

That is, it is possible to execute the direct communication between the terminals satisfying the regulation in the unlicensed band.

### (DEVICE CONFIGURATION)

Next, a functional configuration example of the base station 10 and the terminal 20 which execute the processes and operations described so far will be described. The base station 10 and the terminal 20 include a function to implement the above-described embodiment. However, the base station 10 and the terminal 20 may each have only a part of the functions in the example.

### <BASE STATION 10>

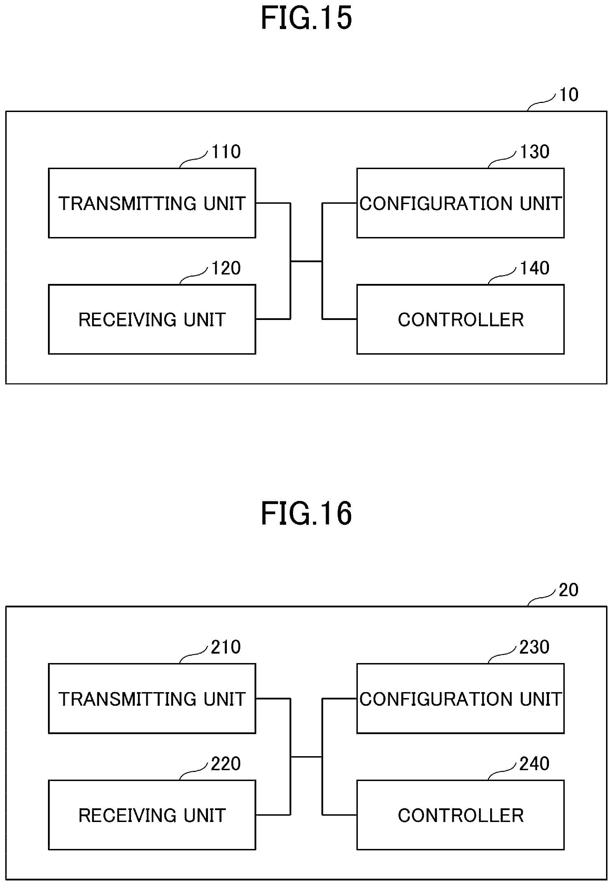

FIG. 15 is a drawing illustrating an example of a functional configuration of a base station 10. As shown in FIG. 15, the base station 10 includes a transmitting unit 110, a receiving unit 120, a configuration unit 130, and a controller 140. The functional configuration shown in FIG. 15 is only an example. As long as the operation according to the embodiment of the present invention can be executed, any functional category and the name of the functional unit can be used.

The transmitting unit 110 includes a function of generating a signal to be transmitted to the terminal 20 and transmitting the signal wirelessly. The receiving unit 120 includes a function of receiving various signals transmitted from the terminal 20 and acquiring, for example, information of a higher layer from the received signal. The transmitting unit 110 also includes a function of transmitting NR-PSS, NR-SSS, NR-PBCH, a DL AND UL control signal, a DL reference signal, and the like to the terminal 20.

The configuration unit 130 stores preset configuration information and various configuration information to be transmitted to the terminal 20 in a storage device and reads them from the storage device as necessary. The content of the configuration information is, for example, information related to the configuration of the D2D communication.

As described in the example, the controller 140 performs processing related to the configuration for the terminal 20 to perform the D2D communication. Further, the controller 140 transmits the scheduling of the D2D communication and the DL communication to the terminal 20 via the transmitting unit 110. Further, the controller 140 receives information related to the HARQ response of the D2D communication and the DL communication from the terminal 20 via the receiving unit 120. The function unit related to the signal transmission in the controller 140 may be included in the transmitting unit 110, and the function unit related to the signal reception in the controller 140 may be included in the receiving unit 120.

### <TERMINAL 20>

FIG. 16 is a drawing illustrating an example of a functional configuration of a terminal 20. As shown in FIG. 16, the terminal 20 has a transmitting unit 210, a receiving unit 220, a configuration unit 230, and a controller 240. The functional configuration shown in FIG. 16 is merely an example. As long as the operation according to the embodiment of the present invention can be executed, any functional category and the name of the functional section can be used.

The transmitting unit 210 generates a transmission signal from the transmission data and transmits the transmission signal wirelessly. The receiving unit 220 receives various signals wirelessly and acquires a signal of a higher layer from the received physical layer signal. The receiving unit 220 also has a function of receiving an NR-PSS, an NR-SSS, an NR-PBCH, a DL, UL, and SL control signal or a reference signal transmitted from the base station 10. For example, the transmitting unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel) and the like to the other terminal 20 as D2D communication, and the receiving unit 220 receives PSCCH, PSSCH, PSDCH, PSBCH and the like from the other terminal 20.

The configuration unit 230 stores various configuration information received from the base station 10 or the terminal 20 by the receiving unit 220 in a storage device and reads it from the storage device as necessary. The configuration unit 230 also stores preset configuration information. The content of the configuration information is, for example, information related to the configuration of the D2D communication.

As described in the example, the controller 240 controls the D2D communication to establish the RRC connection with the other terminal 20. The controller 240 also performs processing related to the power saving operation. The controller 240 also performs processing related to the HARQ of the D2D communication and the DL communication. The controller 240 also transmits information related to the HARQ response of the D2D communication and the DL communication scheduled from the base station 10 to the other terminal 20 to the base station 10. The controller 240 may also perform scheduling of the D2D communication to the other terminal 20. The controller 240 may autonomously select a resource to be used for the D2D communication from the resource selection window based on the sensing result, or may perform reevaluation or preemption. The controller 240 also performs processing related to power saving in transmission and reception of the D2D communication. The controller 240 also performs processing related to inter-terminal cooperation in the D2D communication. The transmitting unit 210 may include a functional unit related to signal transmission in the controller 240, and the receiving unit 220 may include a functional unit related to signal reception in the controller 240.

### (HARDWARE CONFIGURATION)

The block diagrams (FIGS. 15 and 16) used in the description of the above embodiment show blocks of functional units. These functional blocks (components) are implemented by any combination of at least one of hardware or software. The method of implementing each functional block is not particularly limited. That is, each functional block may be implemented using a single device that is physically or logically coupled, or may be implemented using a plurality of devices that are connected directly or indirectly (e.g., using wired, wireless, etc.) to two or more devices that are physically or logically separated. The functional block may be implemented by combining the one device or the plurality of devices with software.

The functions include, but are not limited to, determining, judgment, calculating, computing, processing, deriving, investigating, looking up (search, inquiry), ascertaining, receiving, transmitting, output, access, resolving, selecting, choosing, establishing, comparing, assuming, expecting, considering, broadcasting, notifying, communicating, forwarding, configuring, reconfiguring, allocating (mapping), and assigning. For example, the functional block (functional unit) that functions transmission is referred to as a transmitting unit or a transmitter. As described above, the implementation method is not particularly limited.

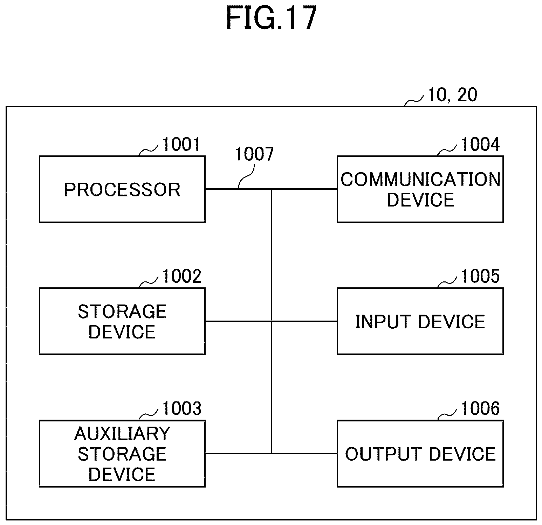

For example, the base station 10, the terminal 20, and the like in one embodiment of the present disclosure may function as computers that perform the processing of the wireless communication method of the present disclosure. FIG. 17 is a drawing showing an example of the hardware configuration of the base station 10 and the terminal 20 according to one embodiment of the present disclosure. Physically, the base station 10 and the terminal 20 may be configured as computer devices including a processor 1001, a storage device 1002, an auxiliary storage device 1003, a communication device 1004, an input device 1005, an output device 1006, a bus 1007, and the like.

In the following description, the term "device" may be replaced with a circuit, a unit, and the like. The hardware configuration of the base station 10 and the terminal 20 may be configured to include one or more of the devices shown in the figure, or may be configured not to include some of the devices.

The functions of the base station 10 and the terminal 20 are achieved by reading predetermined software (programs) into hardware such as the processor 1001 and the storage device 1002, so that the processor 1001 performs calculations and controls communication by the communication device 1004, or controls at least one of reading or writing of data in the storage device 1002 or the auxiliary storage device 1003.

The processor 1001 controls the entire computer by operating an operating system, for example. The processor 1001 may include a central processing unit (CPU) including an interface with peripheral devices, a control device, an arithmetic unit, a register, and the like. For example, the controller 140, the controller 240, and the like may be implemented by the processor 1001.

The processor 1001 reads a program (program code), a software module, data, and the like from at least one of the auxiliary storage device 1003 or the communication device 1004 to the storage device 1002, and executes various processes in accordance with these. As the program, a program that causes the computer to execute at least a part of the operations described in the above-described embodiments is used. For example, the controller 140 of the base station 10 shown in FIG. 15 may be implemented by a control program stored in the storage device 1002 and operated by the processor 1001. For example, the controller 240 of the terminal 20 shown in FIG. 16 may be implemented by a control program stored in the storage device 1002 and operated by the processor 1001. Although the above-described various processes are executed by one processor 1001, they may be executed simultaneously or sequentially by two or more processors 1001. The processor 1001 may be implemented by one or more chips. The program may be transmitted from a network via a telecommunications line.

The storage device 1002 is a computer-readable recording medium, and may include, for example, at least one of ROM (Read Only Memory), EPROM (Erasable Programmable ROM), EEPROM (Electrically Erasable Programmable ROM), RAM (Random Access Memory), or the like. The storage device 1002 may be referred to as a register, a cache, a main memory, and the like. The storage device 1002 can store executable programs (program codes), software modules, and the like for implementing the communication method according to one embodiment of the present disclosure.

The auxiliary storage device 1003 is a computer-readable recording medium, and may include, for example, at least one of an optical disk such as CD-ROM (Compact Disc ROM), a hard disk drive, a flexible disk, a magneto-optical disk (e.g. compact discs, digital versatile discs, Blu-ray (registered trademark) discs), a smart card, a flash memory (e.g., cards, sticks, key drives), a floppy disk (registered trademark), a magnetic strip, or the like. The above-described storage medium may be, for example, a database including at least one of the storage device 1002 and the auxiliary storage device 1003, a server, or other suitable medium.

The communication device 1004 is a hardware (transmission and reception device) to communicate between computers via at least one of a wired network or a wireless network, and may also be referred to, for example, as a network device, a network controller, a network card, or a communication module. The communication device 1004 may include, for example, a high-frequency switch, a duplexer, a filter, a frequency synthesizer, and the like to achieve at least one of frequency division duplex (FDD) or time division duplex (TDD). For example, the transmitting and receiving antenna, the amplifier section, the transmitting and receiving unit, the transmission line interface, and the like may be implemented by the communication device 1004. The transmitting and receiving unit may be physically or logically separated from the transmitting section and the receiving unit.

The input device 1005 is an input device (e.g., keyboard, mouse, microphone, switch, button, sensor, etc.) that receives an input from the outside. The output device 1006 is an output device (e.g., displays, speakers, LED lamps, etc.) that performs an output to the outside. The input device 1005 and the output device 1006 may be integrated **(e.g.,** a touch panel) .

The respective devices such as the processor 1001 and the storage device 1002 are connected by a bus 1007 for communicating information. The bus 1007 may be configured using a single bus or may be configured using different buses for each device.

The base station 10 and the terminal 20 may include hardware such as a microprocessor, a digital signal processor (DSP), an ASIC (Application Specific Integrated Circuit), a PLD (Programmable Logic Device), an FPGA (Field Programmable Gate Array), or the like, by which some or all of the functional blocks may be implemented. For example, the processor 1001 may be implemented using at least one of these types of hardware.

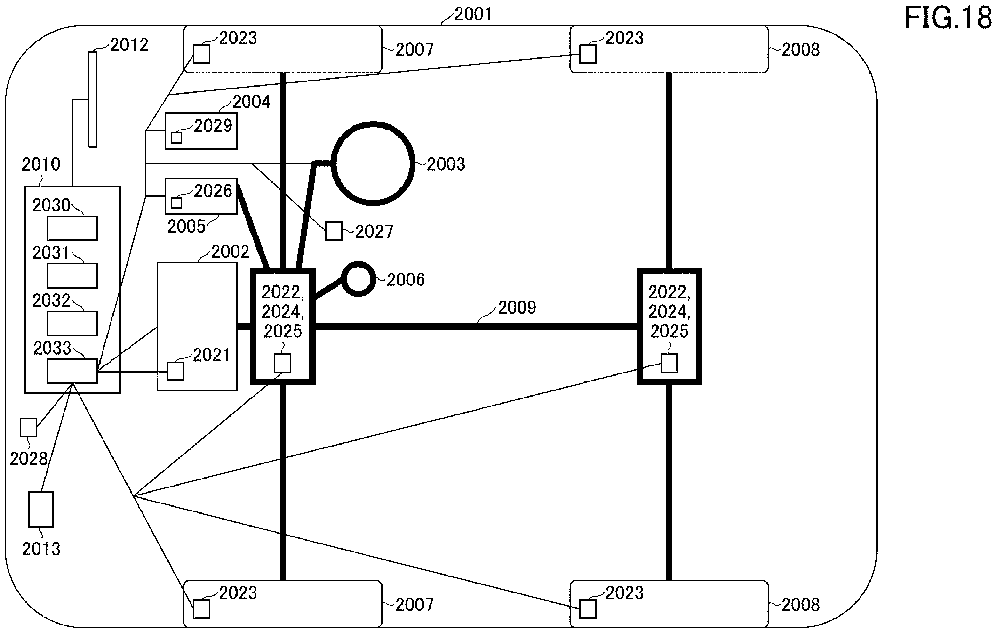

FIG. 18 shows an example of configuration of the vehicle 2001. As shown in FIG. 18, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic controller 2010, various sensors 2021-2029, an information service unit 2012, and a communication module 2013. Each aspect and embodiment described in the present disclosure may be applied to a communication device mounted on the vehicle 2001, for example, the communication module 2013.

The drive unit 2002 includes, for example, an engine, a motor, or an engine and motor hybrid. The steering unit 2003 includes at least a steering wheel (also referred to as a driving wheel) and is configured to steer at least one of the front wheels or the rear wheels based on operation of the steering wheel operated by a user.

The electronic controller 2010 includes a microprocessor 2031, a memory (ROM, RAM) 2032, and a communication port (IO port) 2033. The electronic controller 2010 receives signals from various sensors 2021-2029 provided in the vehicle 2001. The electronic controller 2010 may be referred to as an ECU (Electronic Control Unit).

The signals from the various sensors 2021-2029 include a current signal from a current sensor 2021 for sensing the current of a motor, a rotational speed signal of a front wheel and a rear wheel acquired by a rotational speed sensor 2022, an air pressure signal of a front wheel and a rear wheel acquired by an air pressure sensor 2023, a vehicle speed signal acquired by a vehicle speed sensor 2024, an acceleration signal acquired by an acceleration sensor 2025, a depression amount signal of an accelerator pedal acquired by an accelerator pedal sensor 2029, a depression amount signal of a brake pedal acquired by a brake pedal sensor 2026, an operation signal of a shift lever acquired by a shift lever sensor 2027, and a detection signal for detecting an obstacle, a vehicle, a pedestrian or the like acquired by an object detection sensor 2028.

The information service unit 2012 includes various devices such as a car navigation system, an audio system, a speaker, a television, and a radio to provide (output) various information such as driving information, traffic information, entertainment information, and the like, and one or more ECUs to control these devices. The information service unit 2012 provides various multimedia information and services to the occupants of the vehicle 2001 by using information acquired from an external device via the communication module 2013 or the like. The information service unit 2012 may include an input device (e.g., keyboard, mouse, microphone, switch, button, sensor, touch panel, etc.) to receive input from the outside, or an output device (e.g., displays, speakers, LED lamps, touch panels, etc.) to perform output to the outside.

The driver support system unit 2030 is composed of various devices such as a millimeter wave radar, a LiDAR (Light Detection and Ranging), a camera, a positioning locator (e.g., GNSS, etc.), a map information (e.g., high-definition (HD) maps, autonomous vehicle (AV) maps, etc.), a gyro system (e.g., IMU (Inertial Measurement Unit), INS (Inertial Navigation System), etc.), an AI (Artificial Intelligence) chip, and an AI processor to provide functions to prevent accidents and reduce the driver's driving load, and one or more ECUs to control these devices. The driver support system unit 2030 transmits and receives various types of information via the communication module 2013 to achieve a driver support function or an automatic driving function.

The communication module 2013 can communicate with the microprocessor 2031 and the components of the vehicle 2001 via a communication port. For example, the communication module 2013 transmits and receives data to and from a drive unit 2002, a steering unit 2003, an accelerator pedal 2004, a brake pedal 2005, a shift lever 2006, front wheels 2007, rear wheels 2008, an axle 2009, a microprocessor 2031 in the electronic controller 2010, a memory (ROM, RAM) 2032, and a sensor 2021-29 provided in the vehicle 2001 via the communication port 2033.

The communication module 2013 is a communication device that can be controlled by the microprocessor 2031 in the electronic controller 2010 and can communicate with an external device. For example, it transmits and receives various kinds of information to and from an external device via wireless communication. The communication module 2013 can be either inside or outside the electronic controller 2010. The external device may be, for example, a base station, a mobile station, or the like.

The communication module 2013 may transmit at least one of signals from the above-described various sensors 2021-2028 inputted to the electronic controller 2010, information obtained based on the signals, or information based on an input from an external (user) obtained via the information service unit 2012 to the external device via wireless communication. The electronic controller 2010, the various sensors 2021-2028, the information service unit 2012, and the like may be referred to as input units that accept inputs. For example, the PUSCH transmitted by the communication module 2013 may include information based on the inputs.

The communication module 2013 receives various types of information (traffic information, traffic signal information, inter-vehicle information, etc.) transmitted from the external device and displays them on the information service unit 2012 provided in the vehicle 2001. The information service unit 2012 may be referred to as an output unit to output (For example, based on the PDSCH (or data or information decoded from the PDSCH) received by the communication module 2013, information is output to a device such as a display or a speaker.) information. The communication module 2013 stores various information received from the external device in a memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensor 2021-2029 and the like provided in the vehicle 2001.

### (SUMMARY OF EMBODIMENT)

As described above, according to the disclosed technology, a terminal including a receiving unit configured to receive a signal from another terminal in a resource pool in an unlicensed band, a controller configured to execute LBT (Listen before talk) in the resource pool, and a transmitting unit configured to transmit the signal to another terminal in the resource pool when the LBT is successful, wherein in the resource pool, the controller executes the LBT for a band in which a subchannel to which interlacing of a frequency domain is applied is arranged, is provided.

With the above configuration, the resource pool can be configured to satisfy the regulations by applying the interlacing configuration to the subchannel in the unlicensed band. That is, direct communication between terminals satisfying the regulations in the unlicensed band can be executed.

In the resource pool, the controller may execute the LBT for one or more bands in which one or more subchannels to which a frequency domain interlacing configuration is applied are arranged, for each band in which the LBT is executed. With this configuration, the resource pool can be configured to satisfy the regulations by applying the interlacing configuration to the subchannel in the unlicensed band.

When transmitting is performed using one or more subchannels in the resource pool, the controller may execute the LBT for one or more bands in which the one or more subchannels are arranged, and wherein the transmitting unit may transmit a signal to another terminal in the one or more bands in which the LBT is successful. With this configuration, the resource pool can be configured to satisfy the regulations by applying the interlacing configuration to the subchannel in the unlicensed band.

In the resource pool, the controller may execute the LBT one or more times for a band in which a subchannel to which a frequency domain interlacing configuration is applied is arranged in an entirety of the resource pool. With this configuration, the resource pool can be configured to satisfy the regulations by applying the interlacing configuration to the subchannel in the unlicensed band.

When transmitting is performed using one or more subchannels in the resource pool, the controller may execute the LBT one or more times for the entirety of the resource pool in which the one or more subchannels are arranged, and wherein the transmitting unit may transmit a signal to another terminal by using the subchannels when all of the one or more times of executing the LBT are successful. With this configuration, the resource pool can be configured to satisfy the regulations by applying the interlacing configuration to the subchannel in the unlicensed band.

According to an embodiment of the present invention, a communication method, executed by a terminal, including a receiving process to receive a signal from another terminal in a resource pool in an unlicensed band, a controlling process to execute LBT (Listen before talk) in the resource pool, a transmitting process to transmit the signal to another terminal in the resource pool when the LBT is successful, and a process to execute the LBT for a band in which a subchannel to which an interlacing of a frequency domain is applied is arranged in the resource pool, is provided.

With the above configuration, the resource pool can be configured to satisfy the regulations by applying the interlacing configuration to the subchannels in the unlicensed band. That is, direct communication between terminals satisfying the regulations in the unlicensed band can be executed.

### (SUPPLEMENT TO EMBODIMENTS)

Although the embodiments of the present invention have been described above, the disclosed invention is not limited to such embodiments, and those skilled in the art will understand various variations, modifications, alternatives, substitutions, and the like. Although specific numerical examples have been used to facilitate understanding of the invention, these numerical values are merely examples and any suitable value may be used unless otherwise specified. The categorization of items in the above description is not essential to the present invention, and matters described in two or more items may be used in combination as necessary, and matters described in one item may be applied to matters described in another item (as long as they do not conflict). The boundaries of functional units or processing units in the functional block diagram do not necessarily correspond to boundaries of physical components. The operations of a plurality of functional units may be physically performed by a single component, or the operations of a single functional unit may be physically performed by a plurality of components. With respect to the processing procedures described in the embodiments, the order of processing may be interchanged as long as there is no conflict. For convenience of processing description, the base station 10 and the terminal 20 have been described using functional block diagrams, but such devices may be implemented in hardware, software, or a combination thereof. The software running on the processor of the base station 10 in accordance with an embodiment of the present invention and the software running on the processor of the terminal 20 in accordance with an embodiment of the present invention may be stored in random access memory (RAM) , flash memory, read only memory (ROM), EPROM, EEPROM, registers, hard disk (HDD), removable disk, CD-ROM, database, server, or any other suitable storage medium, respectively.

The notification of information is not limited to the aspects and embodiments described in the present disclosure and may be performed using other methods. For example, the notification of information may be performed by physical layer signaling (e.g., DCI (Downlink Control Information), UCI (Uplink Control Information)), upper layer signaling (e.g., Radio Resource Control (RRC) signaling, Medium Access Control (MAC) signaling), broadcast information (MIB (Master Information Block), SIB (System Information Block)), other signals, or combinations thereof. The RRC signaling may also be referred to as an RRC message, and may be, for example, an RRC Connection Setup message, an RRC Connection Reconfiguration message, or the like.

Aspects and embodiments described in this disclosure may include, but are not limited to, systems utilizing LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, a decimal)), FRA (Future Radio Access), NR (New Radio), New radio access (NX), Future generation radio access (FX), W-CDMA (registered trademark), GSM (registered trademark), CDMA2000, UMB (Ultra Mobile Broadband), IEEE 802.11 (Wi-Fi(registered trademark)), IEEE 802.16 (WiMAX (registered trademark)), IEEE 802.20, UWB (Ultra-WideBand), Bluetooth (registered trademark), other suitable systems, and extensions thereon, and may be applied to at least one of the modified, created, or defined next-generation systems. It may also be applied to a combination of systems (e.g., a combination of at least one of LTE or LTE-A, and 5G, etc.).

The processing procedures, sequences, flowcharts, etc., of the aspects and embodiments described herein may be interchanged in order as long as there is no conflict. For example, the methods described in this disclosure present the elements of the various steps using an exemplary order and are not limited to the particular order presented.

The particular operations described herein as being performed by base station 10 may in some cases be performed by its upper node. It will be apparent that in a network of one or more network nodes having base station 10, the various operations performed for communication with terminal 20 may be performed by at least one of base station 10 or other network nodes (Examples include, but are not limited to, MME or S-GW.) other than base station 10. Although one other network node other than base station 10 is illustrated above, the other network nodes may be a combination (e.g., MME and S-GW) of a plurality of other network nodes.

The information, signals, etc. described in the present disclosure may be output from an upper layer (or lower layer) to a lower layer (or upper layer). The information may be input or output via a plurality of network nodes.

The input or output information may be stored in a specific location (e.g., memory) or managed using a management table. Information and the like input and output may be overwritten, updated, or appended. Information and the like output may be deleted. Information and the like input may be transmitted to other devices.

Decisions in the present disclosure may be made by a value represented by a single bit (0 or 1), a true or false value (Boolean: true or false), or a numerical comparison (e.g., comparison with a predetermined value).

Software, whether referred to as software, firmware, middleware, microcode, hardware description language, or by any other name, should be broadly interpreted to mean instructions, instruction sets, codes, code segments, program codes, programs, subprograms, software modules, applications, software applications, software packages, routines, subroutines, objects, executables, execution threads, procedures, functions, and the like.

Software, instructions, information, and the like may also be transmitted and received over a transmission medium. For example, when software is transmitted from a website, server, or other remote source using at least one of wired (coaxial cable, fiber-optic cable, twisted-pair, digital subscriber line (DSL), etc.) or wireless (infrared rays, microwaves, etc.) technologies, at least one of these wired or wireless technologies is included within the definition of a transmission medium.

Information, signals, and the like described in this disclosure may be represented using any of a variety of different techniques. For example, data, instructions, commands, information, signals, bits, symbols, chips, and the like that may be referred to throughout the above description may be represented by voltages, currents, electromagnetic waves, magnetic fields or magnetic particles, light fields or photons, or any combination thereof.

The terms described in this disclosure and those necessary to understand the disclosure may be replaced with terms having the same or similar meanings. For example, at least one of the channels or symbols may be a signal (signaling). The signal may also be a message. The component carrier (CC) may also be referred to as a carrier frequency, cell, frequency carrier, etc.

As used herein, the terms "system" and "network" are used interchangeably.

Also, the information, parameters, etc. described in the present disclosure may be expressed using absolute values, relative values from predetermined values, or other corresponding information. For example, wireless resources may be indicated by an index.

The names used for the parameters described above are not in any way limiting. Furthermore, formulas, etc. using these parameters may differ from those explicitly disclosed in the present disclosure. Since the various channels (e.g., PUCCH, PDCCH, etc.) and information elements can be identified by any suitable name, the various names assigned to these various channels and information elements are not in any way limiting.

In the present disclosure, terms such as "base station (BS)", "wireless base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like may be used interchangeably. Base stations may also be referred to by terms such as macrocell, small cell, femtocell, picocell, and the like.

A base station may accommodate one or more (e.g., three) cells. When a base station accommodates multiple cells, the entire coverage area of the base station may be partitioned into a plurality of smaller areas, and each smaller area may also provide communication services by a base station subsystem (e.g., a small indoor Remote Radio Head (RRH)). The term "cell" or "sector" refers to a portion or the entire coverage area of at least one of the base stations or base station subsystem providing communication services in this coverage.

In this disclosure, the transmission of information by the base station to a terminal may be replaced as the instruction from the base station to the terminal for an information-based control or operation.

In this disclosure, terms such as "mobile station (MS)", "user terminal", "user equipment (UE)", and "terminal" may be used interchangeably.

A mobile station may also be referred to by those skilled in the art as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable term.

At least one of the base stations or the mobile station may be referred to as a transmitter, receiver, communication device, etc. At least one of the base stations or the mobile station may be a device mounted on a mobile body, a mobile body itself, etc. The mobile body is an object that can move at any speed. It also naturally includes a case where the mobile body is stopped. Such vehicles include, but are not limited to, vehicles, transport vehicles, automobiles, motorcycles, bicycles, connected cars, excavators, bulldozers, wheel loaders, dump trucks, forklifts, trains, buses, carriages, rickshaws, ships and other watercrafts, airplanes, rockets, satellites, drones (registered trademark), multicopters, quadcopters, balloons, and objects mounted thereon. The mobile body may also be a mobile body that runs autonomously based on an operation command. It may be a vehicle (e.g., cars, airplanes, etc.), an unmanned mobile body (e.g, drones, self-driving cars, etc.), or a robot (manned or unmanned). Note that at least one of the base stations or the mobile station includes devices that do not necessarily move during communication operations. For example, at least one of the base stations or the mobile station may be an Internet of Things (IoT) device such as a sensor.

The base station in the present disclosure may be replaced with a user terminal. For example, each aspect and embodiment of the present disclosure may be applied to a configuration in which communication between the base station and the user terminal is replaced with communication between a plurality of terminals 20 (for example, it may be referred to as Device-to-Device (D2D) or Vehicle-to-Everything (V2X)). In this case, a configuration in which the terminal 20 has the function of the above-described base station 10 may be adopted. Further, words such as "up" and "down" may be replaced with words (e.g., "side") corresponding to communication between terminals. For example, an uplink channel, a downlink channel, and the like may be replaced with a side channel.

Similarly, a user terminal in the present disclosure may be replaced with a base station. In this case, a configuration in which the base station has the functions of the user terminal described above may be adopted.

The term "determining" as used in the present disclosure may encompass a wide variety of actions. The terms "determining" may include considering that judging, calculating, computing, processing, deriving, investigating, looking up (search, inquiry) (e.g., searching in a table, database or another data structure), and ascertaining have performed to be "determined". Moreover, "determining" may include considering that receiving (e.g., receiving information), transmitting (e.g., transmitting information), input, output, and accessing (e.g., accessing data in memory) have performed to be "determined" or "determined". Moreover, "determining" may include considering that resolving, selecting, choosing, establishing, and comparing have performed to be "determined" or "determined". That is, "determining" may include considering that some action is "determined" or "determined". Also, "determining" may be replaced with "assuming", "expecting", "considering", and the like.

The term "connected", "coupled", or any variation thereof, means any direct or indirect connection or connection between two or more elements, and may include the presence of one or more intermediate elements between two elements that are "connected" or "coupled" to each other. The connection or connection between the elements may be physical, logical, or a combination thereof. For example, "connect" may be replaced with "access". As used in the present disclosure, two elements may be considered to be "connected" or "coupled" to each other using at least one of one or more wires, cables, or printed electrical connections, and by some nonlimiting and non-exclusive examples, electromagnetic energy having wavelengths in the wireless frequency domain, microwave domain, and optical (both visible and invisible) domain, etc.

The reference signal may also be abbreviated as RS (Reference Signal) and may be referred to as a Pilot depending on the applicable standard.

In the present disclosure, the term "based on" does not mean "based only" unless otherwise specified. In other words, "based on" means both "based only" and "based at least on".

Any reference to elements using designations such as "first", "second", etc. as used in the present disclosure does not generally limit the amount or order of those elements. These designations may be used in the present disclosure as a convenient way to distinguish between two or more elements. Thus, references to the first and second elements do not mean that only two elements may be employed or that in any way the first element is required to precede the second element.

The term "means" in the foregoing configurations of devices may be replaced with "units", "circuits", "devices", and the like.

Where "include", "including", and variations thereof are used in the present disclosure, these terms are intended to be inclusive, as is the term "comprising". Furthermore, the term "or" as used in the present disclosure is intended not to be exclusive-OR.

A wireless frame may include one or more frames in the time domain. Each one or more frames in the time domain may be referred to as a subframe. The subframe may also include one or more slots in the time domain. The subframe may have a fixed time length (e.g., 1 ms) independent of numerology.

A numerology may be a communication parameter applied to at least one of transmitting or receiving of a signal or channel. The numerology may indicate at least one of, for example, subcarrier spacing (SCS), bandwidth, symbol length, cyclic prefix length, transmission time interval (TTI), number of symbols per TTI, wireless frame configuration, a particular filtering operation performed by the transceiver in the frequency domain, a particular windowing operation performed by the transmitter and receiver in the time domain, or the like.

The slot may consist of one or more symbols (OFDM (Orthogonal Frequency Division Multiplexing) symbols, SC-FDMA (Single Carrier Frequency Division Multiple Access) symbols, etc.) in the time domain. The slot may be a time unit based on numerology.

The slot may include a plurality of minislots. Each minislot may consist of one or more symbols in the time domain. The minislot may also be referred to as a subslot. The minislot may consist of fewer symbols than the slot. PDSCH (or PUSCH) transmitted in time units larger than the minislot may be referred to as PDSCH (or PUSCH) Mapping Type A. PDSCH (or PUSCH) transmitted using the minislot may be referred to as PDSCH (or PUSCH) Mapping Type B.

The wireless frame, the subframe, the slot, the minislot, and the symbol all represent time units in transmitting signals. The wireless frame, the subframe, the slot, the minislot, and the symbol may be referred to as different names corresponding to them.

For example, one subframe may be referred to as a transmission time interval (TTI), a plurality of consecutive subframes may be referred to as the TTI, and one slot or one minislot may be referred to as the TTI. That is, at least one of the subframe or the TTI may be the subframe (1 ms) in existing LTE, a period shorter than 1 ms (e.g., 1-13 symbols), or a period longer than 1 ms. Note that the unit representing TTI may be referred to as the slot, the minislot, or the like instead of the subframe.

Here, TTI means, for example, a minimum time unit for scheduling in wireless communication. For example, in an LTE system, the base station performs scheduling to allocate wireless resources (frequency bandwidth, transmission power, etc., that can be used by each terminal 20) to each terminal 20 in TTI units. The definition of TTI is not limited to this.

The TTI may be a transmission time unit for channel-encoded data packets (transport blocks), code blocks, code words, or the like, or it may be a processing unit for scheduling, link adaptation, or the like. When TTI is given, a time interval (e.g., the number of symbols) in which the transport blocks, code blocks, code words, or the like are actually mapped may be shorter than the TTI.

When one slot or one minislot is referred to as TTI, one or more TTIs (i.e., one or more slots or one or more minislots) may be the minimum time unit for scheduling. The number of the slots (number of the minislots) constituting the minimum time unit for scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a minislot, a subslot, a slot, or the like.

The long TTI **(e.g.,** normal TTI, subframe, etc.) may be replaced with a TTI having a time length over 1 ms, and the short TTI (e.g., shortened TTI, etc.) may be replaced with a TTI having a TTI length less than the TTI length of the long TTI and over or equal to 1 ms.

A resource block (RB) is a resource allocation unit in the time domain and the frequency domain, and may include one or more consecutive subcarriers in the frequency domain. The number of subcarriers included in the RB may be the same regardless of the numerology, for example, 12. The number of subcarriers included in an RB may be determined based on the numerology.

The time domain of the RB may include one or more symbols, and may have a length of one slot, one minislot, one subframe, or one TTI. Each one TTI, one subframe, or the like may consist of one or more resource blocks.

The one or more RBs may be referred to as a physical resource block (PRB), a sub-carrier group (SCG), a resource element group (REG), a PRB pair, an RB pair, or the like.

The resource block may consist of one or more resource elements (RE). For example, 1RE may consist of one sub-carrier and one symbol wireless resource area.

The bandwidth part (BWP) (may be referred to as a partial bandwidth, etc.) may represent a subset of consecutive common resource blocks (RBs) for a certain numerology in a certain carrier. Here, the common RB may be specified by an index of RBs with reference to a common reference point of the carrier. A PRB may be defined in a BWP and numbered within the BWP.

The BWP may include a BWP for UL (UL BWP) and a BWP for DL (DL BWP). One or more BWPs may be configured within a carrier for the terminal 20.

At least one of the configured BWPs may be active, and the terminal 20 need not assume to transmit or receive a predetermined signal or channel outside of the active BWP. The terms "cell" and "carrier" in the present disclosure may be replaced with "BWP".

The structures of wireless frames, subframes, slots, minislots, symbols, and the like described above are exemplary only. For example, the number of subframes included in a wireless frame, the number of subframes or slots per wireless frame, the number of minislots included in a slot, the number of symbols and RBs included in a slot or minislot, the number of subcarriers included in an RB, and the number of symbols, symbol lengths, and cyclic prefix (CP) lengths in a TTI may be varied.

In the present disclosure, when articles are added by translation, for example, a, an, and the in English, the present disclosure may include that the nouns following these articles are plural.

In the present disclosure, the term "A and B are different" may mean "A and B are different from each other". The term may mean "A and B are different from C, respectively". Terms such as "separate" and "combined" may also be interpreted as "different".

Each of the aspects and embodiments described in the present disclosure may be used alone, in combination, or switched with the implementation. The notification of predetermined information (e.g., "X" notification) is not limited to an explicit one, but may be performed implicitly (e.g., no notification of the prescribed information).

Although the present disclosure has been described in detail above, it will be apparent to those skilled in the art that the present disclosure is not limited to the embodiments described in the present disclosure. the present invention is not limited to these embodiments, but various variations and modifications may be made without departing from the scope of the present invention. Accordingly, the description of the present disclosure is for illustrative purposes only and does not have any restrictive meaning to the present disclosure.

### DESCRIPTION OF CODES

- 10: base station
- 110: transmitting unit
- 120: receiving unit
- 130: configuration unit
- 140: controller
- 20: terminal
- 210: transmitting unit
- 220: receiving unit
- 230: configuration unit
- 240: controller
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic controller
- 2012: information service unit
- 2013: communication module
- 2021: current sensor
- 2022: rotational speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driver support system unit
- 2031: microprocessor
- 2032: memory (ROM, RAM)
- 2033: communication port (IO port)

## Claims

1. A terminal comprising:
a receiving unit configured to receive a signal from another terminal in a resource pool in an unlicensed band;
a controller configured to execute LBT (Listen before talk) in the resource pool; and
a transmitting unit configured to transmit the signal to another terminal in the resource pool when the LBT is successful,
wherein in the resource pool, the controller executes the LBT for a band in which a subchannel to which interlacing of a frequency domain is applied is arranged.

2. The terminal according to claim 1, wherein in the resource pool, the controller is configured to execute the LBT for one or more bands in which one or more subchannels to which a frequency domain interlacing configuration is applied are arranged, for each band in which the LBT is executed.

3. The terminal according to claim 2, wherein when transmitting is performed using one or more subchannels in the resource pool, the controller is configured to execute the LBT for one or more bands in which the one or more subchannels are arranged, and wherein the transmitting unit is configured to transmit a signal to another terminal in the one or more bands in which the LBT is successful.

4. The terminal according to claim 1, wherein in the resource pool, the controller is configured to execute the LBT one or more times for a band in which a subchannel to which a frequency domain interlacing configuration is applied is arranged in an entirety of the resource pool.

5. The terminal according to claim 4, wherein when transmitting is performed using one or more subchannels in the resource pool, the controller is configured to execute the LBT one or more times for the entirety of the resource pool in which the one or more subchannels are arranged, and wherein the transmitting unit is configured to transmit a signal to another terminal by using the subchannels when all of the one or more times of executing the LBT are successful.

6. A communication method, executed by a terminal, comprising:
a receiving process to receive a signal from another terminal in a resource pool in an unlicensed band;
a controlling process to execute LBT (Listen before talk) in the resource pool;
a transmitting process to transmit the signal to another terminal in the resource pool when the LBT is successful; and
a process to execute the LBT for a band in which a subchannel to which an interlacing of a frequency domain is applied is arranged in the resource pool.
